Europäisches Patentamt

European Patent Office

Office européen des brevets

(19)

(11) Veröffentlichungsnummer: **0 248 174 B1**

## (12) EUROPÄISCHE PATENTSCHRIFT

(45) Veröffentlichungstag der Patentschrift: 26.06.91

(51) Int. Cl.⁵: **B01D 46/52**

(21) Anmeldenummer: 87105457.3

(22) Anmeldetag: 13.04.87

(54) Filteranordnung.

(30) Priorität: 24.04.86 DE 3613823
27.05.86 DE 3617817

(43) Veröffentlichungstag der Anmeldung:
09.12.87 Patentblatt 87/50

(45) Bekanntmachung des Hinweises auf die
Patenterteilung:
26.06.91 Patentblatt 91/26

(84) Benannte Vertragsstaaten:
AT BE CH DE ES FR GB GR IT LI LU NL SE

(56) Entgegenhaltungen:
DE-A- 1 507 756
DE-A- 1 607 697
DE-B- 1 291 184

(73) Patentinhaber: AVK Filtertechnik GmbH
Industriestrasse 1
W-6467 Hasselroth(DE)

(72) Erfinder: Esch, Hans Wilhelm
Eidengesässer Strasse 30
W-6464 Altenhasslau(DE)

(74) Vertreter: Stoffregen, Hans-Herbert, Dr.
Dipl.-Phys. et al
Patentanwälte Strasse & Stoffregen Salzstrasse 11a Postfach 2144
W-6450 Hanau/Main 1(DE)

## Beschreibung

Die Erfindung bezieht sich auf eine Filteranordnung umfassend ein in Falten gelegtes Filtermedium wie Schwebstoffilterpapier mit zwischen nebeneinanderliegenden Abschnitten des Filtermediums angeordneten Abstandshaltern, wobei jeder Abstandshalter vorzugsweise im Längsschnitt zickzackförmig gefaltet ist und entlang dessen einer Längsachse ein im wesentlichen kantenfreier Aufsatz angeordnet ist, auf dem das Filtermedium abstützbar ist.

Es sind Filteranlagen bekannt, in denen staubhaltige Luft oder Gase mittels spezieller abreinigbarer Schwebstoffiltern gefiltert werden. Dabei handelt es sich vorzugsweise um schwebstoffilter der Klasse S, um einen hohen Reinigungsgrad zu erzielen. Die dabei verwendeten Filter umfassen Schwebstoffilterpapier, das normalerweise in einem Holz- oder Metallrahmen (Kassette) in Falten eingelegt und mit dem Rahmen vergossen werden. Zwischen den Falten sind die Abstandshalter angeordnet. Die Filterfläche eines in einem Rahmen von zum Beispiel 610 x 610 x 292 mm³ eingelegten Filterpapiers beträgt zwischen 10 bis 25 m².

Um das Filterpapier in die Kassetten ordnungsgemäß einzubringen, muß eine Konfektionierung erfolgen. Daher wird zunächst auf Rollen aufgewickeltes Bahnenmaterial derart gestanzt, daß an gewünschten Stellen Knickkanten eingeprägt werden, die an den Abstandshaltern anliegen. Die Abstandhalter selbst bestehen normalerweise aus Aluminiumblechen und haben in der Regel eine Stärke von 0,04 mm. die Abstandshalter sind im Schnitt zickzackförmig gefaltet, stellen demzufolge aneinandergereihte dachförmige Abschnitte dar. An den Breitseiten der Abstandshalter, also an den parallel zueinander verlaufenden Knicklinien der Abstandshalter liegen die nebeneinanderliegenden Abschnitte des Filtermediums an. Da diese Kantungen stumpf sind, ist eine Beschädigung des Filtermediums nahezu ausgeschlossen.

Allerdings kann in den Faltlinien des Filtermaterials selbst beim Falten die Gefahr einer Beschädigung erwachsen. Noch größere Gefahr besteht jedoch durch das Anliegen der Längskanten in den Stirnbereichen der Faltungen. Um eine Beschädigung der Filterflächen zu vermeiden, ist daher bereits vorgeschlagen worden, die Längskante des Abstandhalters, die mit dem Filtermedium wechselwirkt, umzubördeln (DE-A-16 07 697). Bei nicht sachgemäßer Konfektionierung bzw. Einbringen des gefalteten Filtermediums mit den Abstandshaltern in den Rahmen besteht jedoch nach wie vor die Gefahr einer Beschädigung und damit teilweisen Unwirksamkeit des Filters, da die umgebördelten Kanten normalerweise eine Dicke von 0,08 mm aufweisen. Die Kanten sind also weiterhin scharf.

Der DE-B-15 07 756 ist eine Filteranordnung mit zickzackförmig gefalteten Abstandselementen zu entnehmen, deren Längskanten von Schutzkappen überdeckt sind, die sich entlang der die Knicklinien aufweisenden Seitenflächen erstrecken. Dadurch sind wesentliche Nachteile gegeben. Zum einen ist der Übergang zwischen der Schutzkappe und den Seitenflächen nicht stetig, so daß die Gefahr der Beschädigung des Filtermediums erwächst. Zum anderen und von größerem Nachteil ist, daß durch die sich zwischen den Seitenflächen und der Kappe ausbildenden Stufen verhindert wird, daß sich das Filtermedium in der gesamten Filtertiefe entlang der Seitenflächen abstützt. Durch den Abstand zwischen Seitenfläche und Filtermedium kann dieses bei Luftdurchströmung flattern. Dieses Flattern oder Vibrieren führt jedoch zu einer vorzeitigen Zerstörung des Filtermediums.

Aufgabe der vorliegenden Erfindung ist es, eine Filteranordnung der eingangs beschriebenen Art so auszubilden, daß die Gefahr einer Beschädigung des Filtermediums völlig ausgeschlossen ist und dennoch das Filtermedium an den Abstandshaltern anliegen kann.

Die Aufgabe wird erfindungsgemäß dadurch gelöst, daß der Aufsatz zumindest in dem mit dem Filtermedium wechselwirkenden Bereich kantenfrei ist und daß die Breite des Aufsatzes der Breite des gefalteten Abstandshalters entspricht. Der Aufsatz kann insbesondere kreis- oder halbkreisförmig ausgebildet sein. Der Aufsatz kann eine Rundschnur, ein Schlauchelement oder ähnliches sein.

Selbstverständlich kann der Aufsatz auch als Vieleck ausgebildet sein, sofern sich hierdurch keine Scharfkantigkeit ausbildet, die zu einer Beschädigung des Filtermediums führen könnte. Eine solche Ausbildung des Aufsatzes wird im Sinne der Erfindung auch als kantenfrei aufgefaßt.

Insbesondere zeichnet sich die Erfindung dadurch aus, daß der Aufsatz lösbar auf der Längskante angeordnet ist, ohne diese zu umfassen.

Erfindungsgemäß wird demzufolge vorgeschlagen, daß die jeweilige Längskante des Abstandshalters mit einem Aufsatz versehen ist, an den das Filtermedium entlanggeführt wird. Da der wirksame Bereich des Aufsatzes scharfe Kanten nicht mehr aufweist, ist die Verletzungsgefahr für das Filtermedium ausgeschlossen.

Da der kantenfreie Aufsatz nicht breiter als der Abstandshalter ist, ist das Filtermedium über die gesamte Tiefe der Abstandshalter fest eingespannt und kann sich somit nicht bewegen. Bei dem kreis- oder halbkreisförmig ausgebildeten Aufsatz ergeben sich fast laminare Einströmverhältnisse, wodurch sich die Strömungsverluste um etwa 20% im Vergleich zu den nach dem Stand der Technik mit U-förmigen Aufsätzen versehenen Filtern bei gleichem Volumen ergeben. Auch ist der Abrieb durch das abzusaugende Gas im Bereich des Aufsatzes erheblich geringer.

Durch den Aufsatz selbst ist es auch nicht mehr erforderlich, daß das Filtermedium zuvor ekkig gefaltet wird, ein zwingender Verfahrensschritt nach dem Stand der Technik mit umgebördelten Rändern, um eine Anpassung an die Breite des Abstandshalters vorzunehmen.

Ein weiterer Vorteil durch den die Längskante abdeckenden Aufsatz ist während der Abreinigung des Filtermediums gegeben. Ist nach dem Stand der Technik in den Stirnbereichen der Faltungen, die dem zur Abreinigung verwendeten Preßluftstrahl ausgesetzt sind, eine unerwünschte Belastung durch den auftretenden Anpreßdruck gegeben, wodurch die Gefahr einer Beschädigung erwächst, so erfolgt durch die erfindungsgemäß vorgeschlagene Rundung ein automatisches seitliches Ableiten des Preßluftstrahls in die Falten, also in den Bereich der Abstandshalter. Die Verletzungsgefahr des Filtermediums wird dadurch erheblich reduziert.

Nach einer weiteren Ausführungsform der Erfindung ist die Kontur des mit dem Filtermedium wechselwirkenden Bereichs des Aufsatzes im Schnitt bogenförmig.

Grundsätzlich würde auch ein aus einer Leiste bestehender Aufsatz die erfindungsgemäße Aufgabe erfüllen, sofern die mit dem Filtermedium wehselwirkenden Kanten abgerundet sind und die Breite der des Abstandshalters entspricht.

Ohne die Erfindung zu verlassen, kann der Abstandshalter mit dem Aufsatz einstückig ausgebildet und z.B. aus Kunststoff gegossen oder extrudiert sein. Auch braucht der Abstandshalter nicht notwendigerweise zickzackförmig gefaltet zu sein. Vielmehr kann der Abstandshalter auch ein Hohlkörper mit abgerundeten Kanten sein, der in etwa der Umhüllenden üblicher Abstandshalter entspricht.

Nach einer weiteren Ausführungsform der Erfindung wird der Aufsatz durch ein Elastomer wie zum Beispiel Siliconkautschuk gebildet, wobei vorzugsweise die Längskante innerhalb des Aufsatzes verläuft. Hierdurch sind Paßungenauigkeiten während des Aufbringens des Aufsatzes auf die Längskante des Abstandshalters unbeachtlich, da scharfe Kanten, die ausschließlich im Bereich der Längskante auftreten, auf keinen Fall mit dem Filtermedium wechselwirken können.

Ist der Aufsatz als Rundschnur oder als Rohr ausgebildet, s o braucht diese bzw. dieses nur auf die Längskante -genauer gesagt auf die Seite, in deren Ebene die gefalteten Stirnkanten des Abstandshalters verlaufen- gelegt zu werden, um die das Filtermedium umgelegt ist.

Selbstverständlich kann der Aufsatz auch aus z.B. Keramik, Glas oder Metall bestehen.

Nach einem weiteren Vorschlag der Erfindung ist vorgesehen, daß eine rinnenartig ausgebildete Form nach Aussprühen dieser mit einem Trennmittel mit einem Elastomer ausgegossen wird, um anschließend die mit dem erfindungsgemäßen Aufsatz zu versehende Längskante einzubringen. Sobald das Elastomer etwas gehärtet ist, also aus der Form entfernbar ist, wird der Abstandshalter zusammen mit dem Aufsatz aus der Form herausgenommen. Sobald das Elastomer im gewünschten Umfang ausgehärtet ist, kann es für eine erfindungsgemäße Filteranordnung Verwendung finden.

Weitere Einzelheiten, Vorteile und Merkmale der Erfindung ergeben sich nicht nur aus den Ansprüchen, den diesen zu entnehmenden Merkmalen -für sich und/oder in Kombination-, sondern auch aus der nachfolgenden Beschreibung eines in der Zeichnung dargestellten bevorzugten Ausführungsbeispiels.

Es zeigen:

Fig. 1    einen Ausschnitt einer Filteranordnung nach dem Stand der Technik,

Fig. 2    einen Ausschnitt einer ersten Ausführungsform einer erfindungsgemäß ausgebildeten Filteranordnung,

Fig. 3    eine Seitenansicht eines Abstandshalters der Filteranordnung nach Fig. 2,

Fig. 4    eine Schnittdarstellung entlang der Linie IV-IV in Fig. 3,

Fig. 5    eine Schnittdarstellung entlang der Linie V-V in Fig. 3,

Fig. 6    einen Ausschnitt einer zweiten Ausführungsform einer erfindungsgemäß ausgebildeten Filteranordnung,

Fig. 7    eine Seitenansicht eines Abstandshalters der Filteranordnung nach Fig. 6,

Fig. 8    eine Schnittdarstellung entlang der Linie VIII-VIII der Fig. 7 und

Fig. 9    eine Schnittdarstellung entlang der Linie IX-IX der Fig. 8.

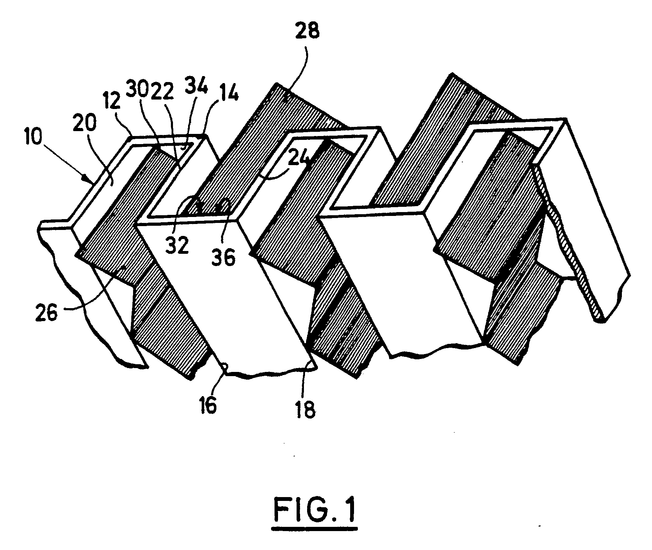

In Fig. 1 ist ein Ausschnitt einer vorzugsweise abreinigbaren Filteranordung dargestellt. Als Filtermedium wird ein gefaltetes Filterpapier (10), vorzugsweise Schwebstoffilterpapier benutzt. Die Faltung des Filterpapiers (10) erfolgt dabei mittels einer Faltmaschine, wobei der Abstand der Kanten (12), (14) bzw. (16) und (18) im Bereich der Stirnflächen des Filtermediums (10) an die Tiefe des zwischen aneinandergrenzenden Abschnitten (20), (22) bzw. (22), (24) des Filtermediums (10) eingebrachten Abstandshaltern (26) und (28) angepaßt ist. Bei den Abstandshaltern (26), (28) handelt es sich um zickzackförmig gebogene Aluminiumbleche, von denen eine Längskante, in dem Ausführungsbeispiel die Längskanten (30) und (32) mit den innenliegenden Stirnflächen (34) und (36) des Filtermediums (10) wechselwirken. Zwar sind die Längskanten (30), (32) der Abstandshalter (26), (28) normalerweise umgebördelt, um nicht zu scharfkantig ausgebildet zu sein, jedoch besteht weiterhin die Gefahr einer Verletzung des Filtermediums (10), da die Stärke des verwendeten Bleches normalerweise im Bereich von 0,04 mm liegt, so daß die umgebördelten Kanten (30) und (32) nur die Stärke von 0,08 mm aufweisen.

Aber nicht nur durch die Längskanten (30) und (32) der Abstandshalter (26) und (28) besteht die Gefahr einer Verletzung des Filtermediums (10), sondern auch durch die Faltungen (12), (14), (16), (18) selbst.

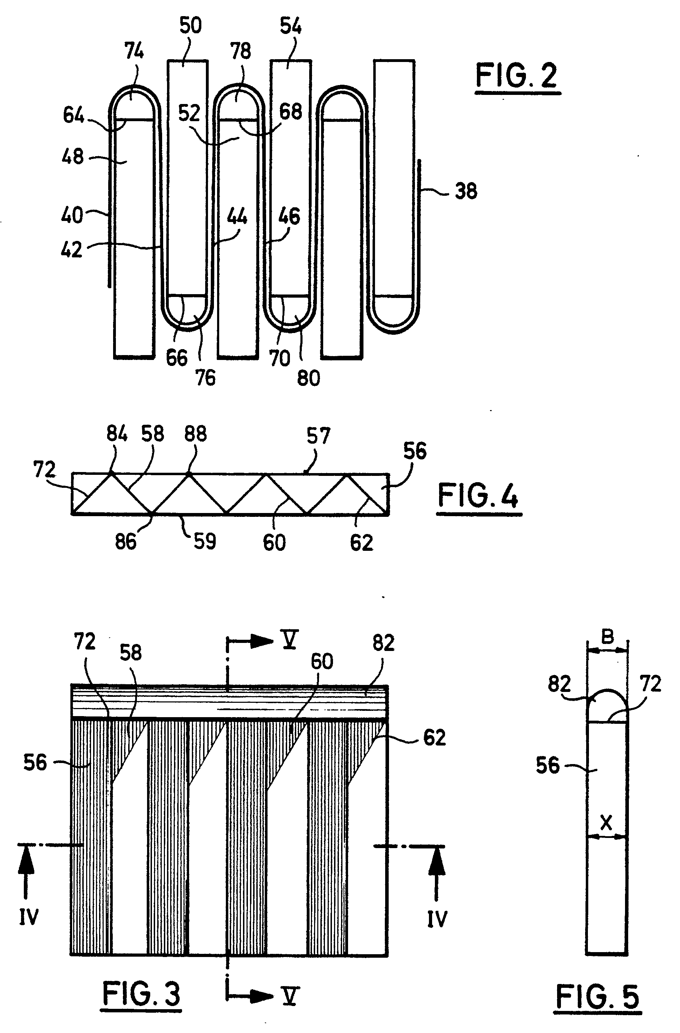

Den Fig. 2 bis 5 sind Ausschnitte einer ersten Ausführungsform einer erfindungsgemäß ausgebildeten Filteranordnung dargestellt. Bei einer entsprechenden Filteranordnung ist das verwendete Filtermedium (38) ebenfalls in Falten in einen nicht dargestellen zum Beispiel aus Holz oder Metall bestehenden Rahmen eingelegt. Zwischen den aneinandergrenzenden Abschnitten (40), (42) bzw. (42), (44) bzw. (44), (46) des Filtermediums (38) sind ebenfalls vorzugsweise aus Aluminiumblech oder auch aus imprägniertem Papier oder Kunststoff gefaltete Abstandshalt er (48), (50), (52), (54) angeordnet, die im Längsschnitt zickzackförmig ausgebildet sind, wie eine Schnittdarstellung entlang der Linie IV-IV eines Abstandshalters (56) gemäß Fig. 3 bzw. Fig. 4 verdeutlicht. Mit anderen Worten wird die Geometrie der Abstandshalter (48), (50), (52), (54) bzw. (56) durch dachförmig gegeneinander geneigte Flächen gebildet, von denen beispielhaft drei mit den Bezugszeichen (58), (60), (62) versehen sind. Die Längskanten (64), (66), (68), (70), (72) -genauer gesagt die Ebenen, in denen die zickzackförmigen Kanten der Abstandshalter (48), (50), (52), (54), (56) verlaufen-, in deren Bereich das Filtermedium (38) umgelegt wird, weisen Aufsätze (74), (76), (78), (80), (82) auf, die im Schnitt bogenförmig ausgebildet sind und vollständig die erwähnten Längskanten abdecken, von denen die Spitzen (durch die Bezugszeichen (84), (86) und (88) angedeutet) bei den bekannten Anordnungen zu Beschädigungen des Filtermediums führen können. Dabei ist die Breite B der Aufsätze (74), (76), (78), (80), (82) gleich der Breite x der Abstandshalter (48), (50), (52), (54), (56), also nach Fig. 4 der Abstand der Linien (57) und (59), in denen die Spitzen (84), (88) bzw. (86) liegen. Demzufolge gelangt das Filtermedium (38) nicht mehr unmittelbar mit den Spitzen (84), (86), (88) der Kanten (64), (66), (68), (70), (72) in Berührung, sondern mit den vorzugsweise im Schnitt bogenförmig ausgebildeten Aufsätzen (74), (76), (78), (80), (82). Hierdurch ist eine Verletzungsgefahr des Filtermediums ausgeschlossen. Außerdem ist es nicht mehr erforderlich, daß das Filtermedium vorgefaltet wird, damit der Abstand der in Fig. 1 beschriebenen Faltkanten im Bereich der Stirnflächen der Falten an die Tiefe der in einer Ebene verlaufenden zickzackförmigen Längskante angepaßt wird. Da ferner die Breite B der Aufsätze (74), (76), (78), (80), (82) gleich der der Abstandshalter (48), (50), (52), (54), (56) ist, liegen die Abschnitte (40), (42), (44), (46) des Filtermediums (38) fest abgestützt zwischen den Abstandshaltern (48), (50) bzw. (50), (52) bzw. (52), (54), so daß ein Flattern bzw. Vibrieren unmöglich ist.

Die Aufsätze (74), (76), (78), (80), (82) können aus einem Elastomer wie zum Beispiel Silikonkautschuk bestehen. Hierdurch können auf herstellungstechnisch einfache Weise die Längskanten mit den Aufsätzen versehen werden. Es ist zum Beispiel nur erforderlich, daß eine rinnenartige Form mit einem flüssigen Elastomer ausgefüllt wird, um anschließend die mit dem Aufsatz zu versehene Kante einzubringen. Sobald das Elastomer soweit ausgehärtet ist, daß es aus der Form entfernbar ist, wird der Abstandshalter mit dem bereits die gewünschte Form aufweisenden Aufsatz aus der Form entfernt, um nach weiterer Aushärtung als fertiger erfindungsgemäß ausgebildeter Abstandshalter in einer Filteranordnung Verwendung zu finden. Um ein einfaches Herauslösen aus der Form zu ermöglichen, wird vor Einbringen des flüssigen Elastomers die Form mit einem Trennmittel ausgestrichen bzw. ausgesprüht.

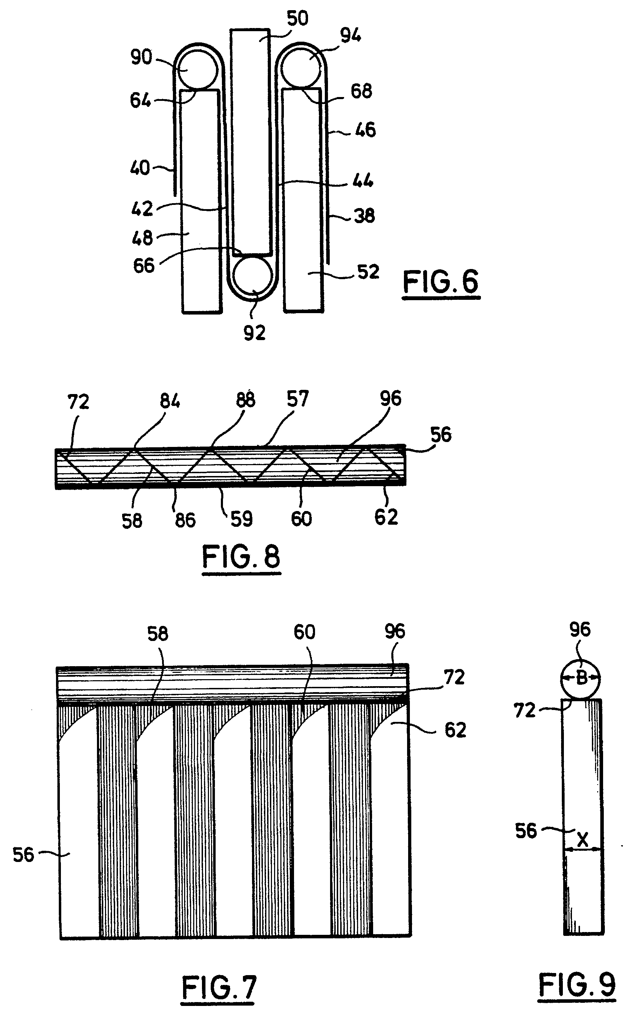

Den Fig. 6 bis 9 ist eine besonders hervorzuhebende eigenständige Ausführungsform einer erfindungsgemäß ausgebildeten Filteranordnung zu entnehmen, in der diejenigen Elemente, die bereits im Zusammenhang mit den Fig. 2 bis 5 beschrieben worden, die gleichen Bezugszeichen erhalten.

Im Unterschied zu der Ausführungsform nach den Fig. 2 bis 5 wird nunmehr vorgeschlagen, daß die Abstandshalter (48), (50), (52) bzw. (56) mit einem im Schnitt kreisförmigen Aufsatz (90), (92), (94) bzw. (96) versehen sind. Dabei ist der Aufsatz (90), (92), (92) bzw. (96) lösbar auf den Längskanten (64), (66), (68) bzw. (72) angeordnet. Mit anderen Worten wird der Aufsatz (90), (92), (94), (96), der z. B. eine Rundschnur aus jedem beliebigen Material oder auch ein rohrförmiges Element oder sogar ein Schlauch sein kann, nur auf die zickzackförmig verlaufenden Längskanten (64), (66), (68) bzw. (72) draufgesetzt und deckt diese gegen das Filtermedium (38) ab, um es vor Beschädigungen zu schützen.

Wie insbesondere die Fig. 8 in rein schematischer und vereinfachter Darstellung verdeutlicht, deckt der kreisförmige Aufsatz (96) die Spitzen (84), (86) und (88) ab, so daß das Filtermedium (38) sicher vor Beschädigungen geschützt ist, ohne daß verhindert wird, daß das Filtermedium (38) über die Tiefe des Abstandshalters (56) vollständig an diesem abgestützt wird.

Ohne die Erfindung zu verlassen, kann der Aufsatz im Schnitt auch als Vieleck wie z.B. 8-Eck ausgebildet sein, sofern die mit dem Filtermedium wechselwirkenden Bereiche nicht scharfkantig sind und somit nicht zu Beschädigungen führen können.

**Ansprüche**

1. Filteranordnung umfassend ein in Falten geleg- tes Filtermedium (38) wie Schwebstoffilterpa- pier mit zwischen nebeneinander-liegenden Abschnitten des Filtermediums angeordneten Abstandshaltern (48, 50, 52, 54), wobei jeder Abstandshalter vorzugweise im Längsschnitt zickzackförmig gefaltet ist und mit einem entlang dessen einer Längskante (64, 66, 68, 70, 72) ein im wesentlichen kantenfreier Aufsatz (74, 76, 78, 80, 82, 90, 92, 94, 96) angeordnet ist, auf dem das Filtermedium abstützbar ist, **dadurch gekennzeichnet,** daß der Aufsatz (74, 76, 78, 80, 82, 90, 92, 94, 96) zumindest in dem mit dem Filtermedium (38) wechselwirkenden Bereich kantenfrei ist und daß die Breite des Aufsatzes der Breite (x) des gefalteten Abstandshalters (48, 50, 52, 54) entspricht.

2. Filteranordnung nach Anspruch 1, **dadurch gekennzeichnet,** daß der Aufsatz (90, 92, 94, 96) lösbar auf der Längskante (64, 66, 68, 72) angeordnet ist, ohne diese zu umfassen.

3. Filteranordnung nach zumindest Anspruch 1, **dadurch gekennzeichnet,** daß der Aufsatz (90, 92, 94, 96) im Schnitt kreis- oder halbkreisförmig ist.

4. Filteranordnung nach zumindest Anspruch 1, **dadurch gekennzeichnet,** daß der Aufsatz (90, 92, 94, 96) eine Rundschnur, ein Schlauchelement oder ähnliches ist.

5. Filteranordnung nach Anspruch 1, **dadurch gekennzeichnet,** daß die Kontur des mit dem Filtermedium wechselwirkenden Bereichs des Aufsatzes (74, 76, 78, 80, 82) im Schnitt bogenförmig ist.

6. Filteranordnung nach Anspruch 1, **dadurch gekennzeichnet,** daß der Aufsatz (74, 76, 78, 80, 82) ein Kreizylinderabschnitt oder ein Flachprofil mit abgerundeten Kanten ist, die bündig zu den Seitenflächen des Abstandshalters verlaufen.

7. Filteranordnung nach zumindest Anspruch 1, **dadurch gekennzeichnet,**

daß der Aufsatz (74, 76, 78, 80, 82) aus einem Elastomer wie zum Beispiel Siliconkautschuk oder aus Keramik, Glas, Metall gebildet ist.

8. Filteranordnung nach Anspruch 1, **dadurch gekennzeichnet,** daß der Aufsatz mit den Abstandshaltern als Einheit ausgebildet und zum Beispiel aus Kunststoff gegossen oder extrudiert ist.

**Claims**

1. A filter arrangement comprising a pleated filter means (38), like filter paper for suspended matter, with distance pieces (48,50,52,54) arranged between adjacent sections of the filter means, where each distance piece is zigzag folded preferably in longitudinal section, and with an essentially edgeless cap (74,76,78,80,82,90, 92,94,96) being arranged along one of the longitudinal edges (64,66,68,70,72) of said distance piece and adapted to support the filter means, **characterized** in that the cap (74,76,78,80,82,90,92,94,96) is being free of edges at least in the range supporting the filter means (38) and that the width of the cap corresponds to the width (x) of the folded distance piece (48,50, 52, 54).

2. A filter arrangement according to Claim 1, **characterized** in that the cap (90,92,94,96) is detachably arranged on the longitudinal edge (64,66,68,72) without enclosing it.

3. A filter arrangement at least according to Claim 1, **characterized** in that the cap (90,92,94,96) is circular or semicircular in section.

4. A filter arrangement at least according to Claim 1, **characterized** in that the cap (90, 92,94,96) is a round cord, a tube element, or the like.

5. A filter arrangement according to Claim 1, **characterized** in that the contour of that range of the cap (74,76,78, 80, 82) interacting with the filter means is arc-shaped in section.

6. A filter arrangement according to Claim 1, **characterized** in that the cap (74, 76, 78, 80, 82) is a segment of a regular cylinder or a flat profile with rounded edges extending flush to the lateral faces of the distance piece.

7. Filter arrangement at least according to Claim 1,

characterized in that the cap (74, 76, 78, 80, 82) is made of an elastomer like e.g. silicon rubber, or of ceramics, glass, metal.

8. Filter arrangement according to Claim 1, **characterized** in that the cap together with the distance pieces is designed as one piece, and e.g. cast or extruded from synthetic material.

**Revendications**

1. Ensemble de filtres comprenant un milieu de filtrage mis en plis (38) comme du papier de filtrage pour matières en suspension muni d'écarteurs (48, 50, 52, 54) disposés entre les secteurs juxtaposés du milieu de filtrage, chacun des écarteurs étant plié de préférence en zig-zag en direction longitudinale et dont l'arête longitudinale (64, 66, 68, 70,72) comprend une garniture essentiellement sans arête (74, 76, 78, 80, 82 90, 92, 94, 96) sur laquelle repose le milieu de filtrage,
caractérisé par le fait que
la garniture (74, 76, 78, 80, 82, 90, 92, 96) est sans arêtes au moins dans la zone d'interaction avec le milieu de filtrage (38) et que la largeur de la garniture correspond à la largeur (x) du écarteur plié (48, 50, 52, 54).

2. Ensemble de filtres selon revendication n° 1 caractérisé par le fait que
la garniture (90, 92, 94, 96) est disposée amovible sur l'arête longitudinale (64, 66, 68, 72) sans l'entourer.

3. Ensemble de filtres selon au moins revendication n° 1
caractérisé par le fait que
la garniture (90, 92, 94, 96) est coupée en forme circulaire ou semi-circulaire.

4. Ensemble de filtres selon au moins revendication n° 1,
caractérisé par le fait que
la garniture (90, 92, 94, 96) dispose d'une corde, d'un flexible ou d'objet similaire.

5. Ensemble de filtres selon revendication n° 1 caractérisé par le fait que
le contour de la zone de la garniture (74, 76, 78, 80, 82) en interaction avec le milieu filtrant a une forme d'arc.

6. Ensemble de filtres selon revendication n° 1 caractérisé par le fait que
la garniture (74, 76, 78, 80, 82) est une section en forme de cylindre circulaire ou un profil ayant des arêtes arrondies affleurées aux bords latéraux de l'écarteur.

7. Ensemble de filtres selon au moins revendication n° 1,
caractérisé par le fait que
la garniture (74, 76, 78, 80, 82) consiste d'un élastomère comme par exemple de caoutchouc silicone, ou de céramique, de verre ou de métal.

8. Ensemble de filtres selon revendication n° 1 caractérisé par le fait que
la garniture et les écarteurs forment une unité moulée par exemple en matière plastique ou elle a été extrudée.

## FIG.1

FIG. 2

FIG. 4

FIG. 3

FIG. 5

FIG.6

FIG.8

FIG.7

FIG.9